# EUROPEAN PATENT SPECIFICATION

(11) **EP 2 475 152 B1**
(45) Date of publication and mention of the grant of the patent: **15.01.2014**
(21) Application number: 11189324.4
(22) Date of filing: 16.11.2011
(51) Int. Cl.: H04M 1/02

(54) **Slidable handheld electronic device**
Schiebbare tragbare elektronische Vorrichtung
Dispositif électronique portable coulissant

(30) Priority: 06.01.2011 TW 100100498
(43) Date of publication of application: 11.07.2012
(73) Proprietor: HTC Corporation, Taoyuan County 330 (TW)
(72) Inventor: Wei, Chih-Sheng, 330 Taoyuan City, Taoyuan County (TW)
(74) Representative: 2K Patentanwälte Blasberg Kewitz & Reichel

(56) References cited:
- JP-A- 2006 186 577
- US-A1- 2006 252 471

## Description

### BACKGROUND

### 1. Field of the Application

The application relates to an electronic device. Particularly, the application relates to a handheld electronic device.

### 2. Description of Related Art

A handheld electronic device refers to an electronic device capable of being carried and operated by a user. The handheld electronic device generally has smaller size and weight to facilitate the user to carry around. The commonly used handheld electronic devices include mobile phones, multimedia players, personal digital assistants (PDAs), handheld game machines, handheld satellite navigators and notebook computers, etc. Taking the mobile phone as an example, the early mobile phone has a bar-type design. However, in order to increase carrying convenience of the mobile phone while maintaining a screen area and a keyboard area of the mobile phone, a folding-type and a slide-type mobile phones are developed.

Taking the slide-type mobile phone as an example, a sliding operation thereof may be implemented by relatively sliding two bodies thereof through a slide mechanism, so that one body can be rotated and raised relative to another body to present a standing pose, so as to achieve different appearance patterns of the two bodies.

In order to achieve the above motion, a plurality of components such as cams pivots or springs, etc. are required to be disposed in one of the bodies, and these members occupies a large space, so that the slide-type mobile phone may be hard to be lighted and thinned. Moreover, when the body is in the standing pose, and the user wants to operate the standing body (for example, operate a touch screen of the body), the body can be only supported by the aforementioned pivot, which may generally cause a poor operating sense due to a poor structure strength.

US 2006252471 A relates to a tilting and sliding mobile device. The tilting and sliding mobile device comprises a first module, a second module, and a connecting module. The first module comprises a display device. The second module is slidably connected to the first module at an adjustable angle. The connecting module, with one end connecting to the first module and another end connecting to the second module, comprises a tilting component and a sliding component. The tilting component is tiltably connected to the sliding component at an angle, which is adjustable with respect to relative movement of the first and the second module.

JP 2006186577 A relates to a portable terminal device capable of securing a prescribed opening angle between a screen case and a key case without using a member to be obstructive when held by a user, and also, capable of suppressing the thickness of the screen case and that of the key case. A hinge 6 is engaged with the key case 1 by a hinge fixing pin 7. A case supporting member 5 is provided whose upper end 5c is rotated in the elevation angle direction of the key case 1 with the hinge part 6 as a fulcrum. The screen case 9 is coupled with the case supporting member 5 so as to be freely slidable in the longitudinal direction of the key case 1.

### SUMMARY

The application may be directed to a handheld electronic device, which has fewer components, a light and thin profile and better operating sense.

The application provides a handheld electronic device including a first body, a second body, a sliding bracket, a hinge and a raising member. The first body has a first end and a second end opposite to the first end. The second body may be disposed on the first body. The sliding bracket may be disposed between the first and the second body. The second body may be slidably disposed on the sliding bracket to slide relative to the first body. The sliding bracket has a pivot portion away from the second end of the first body. The hinge may be connected between the pivot portion of the sliding bracket and the first body. The raising member may be disposed at the second end of the first body and leans against the sliding bracket to supply a rotating moment to the sliding bracket. The second body may be adapted to move toward the second end of the first body to present a spreading status, and the rotating moment may be adapted to drive the second body to rotate along the hinge in the spreading status.

According to the above descriptions, in the handheld electronic device of the application, by disposing the sliding bracket and the raising member at one end of the first body, the first body may have more available space. Moreover, as the raising member leans against the sliding bracket, the raising member may supply a rotating moment to the sliding bracket to drive the second body to rotate along the hinge when the second body may be in the spreading status relative to the first body. In this way, the handheld electronic device may implement motion demands of sliding and rotating through a simple mechanism. Therefore, the handheld electronic device may be developed to be lighter and thinner.

In order to make the aforementioned and other features and advantages of the application comprehensible, several exemplary embodiments accompanied with figures are described in detail below.

### BRIEF DESCRIPTION OF THE DRAWINGS

The accompanying drawings are included to provide a further understanding of the application, and are incorporated in and constitute a part of this specification. The drawings illustrate embodiments of the application and, together with the description, serve to explain the principles of the application.
FIG. 1 is an exploded view of a handheld electronic device according to an embodiment of the application.
FIG. 2 to FIG. 4 are schematic diagrams of the handheld electronic device of FIG. 1 in different status.
FIG. 5 is a schematic diagram of a handheld electronic device according to another embodiment of the application.

### DETAILED DESCRIPTION OF DISCLOSED EMBODIMENTS

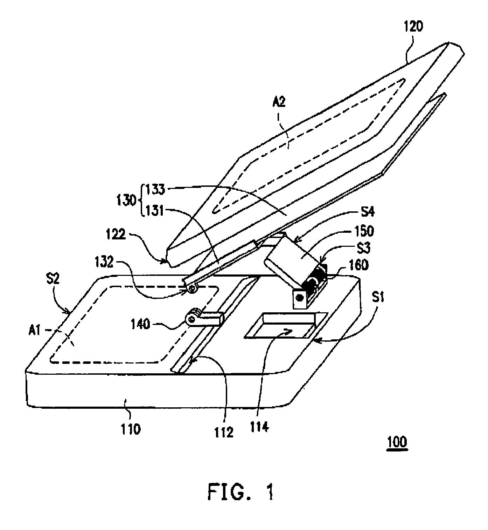

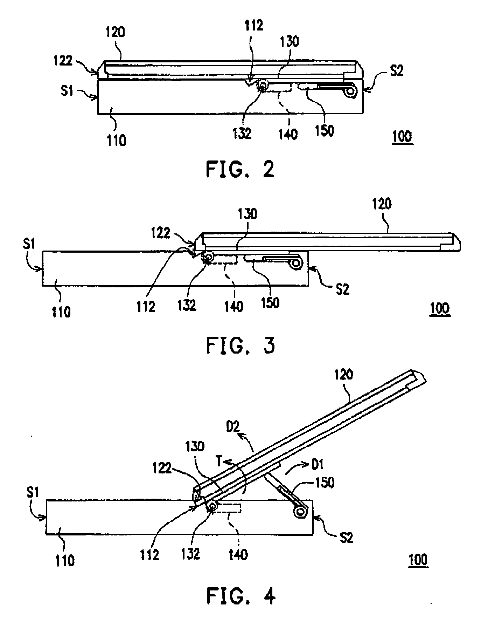

FIG. 1 is an exploded view of a handheld electronic device according to an embodiment of the application. FIG. 2 to FIG. 4 are schematic diagrams of the handheld electronic device of FIG. 1 in different status. Referring to FIG. 1 to FIG. 4, in the present embodiment, the handheld electronic device 100 includes a first body 110, a second body 120, a sliding bracket 130, a hinge 140 and a raising member 150. The first body 110 has a keyboard A1, and the second body 120 has a touch screen A2. When the first body 110 and the second body 120 are in a status shown in FIG. 2, a user may operate the handheld electronic device 100 through the touch screen A2, and when the first body 110 and the second body 120 are in a status shown in FIG. 4, the user may simultaneously operate the handheld electronic device 100 through the keyboard A1 and the touch screen A2, though the application is not limited thereto.

The first body 110 has a first end S1 and a second end S2 opposite to the first end S1. The second body 120 may be disposed on the first body 110. The sliding bracket 130 may be disposed between the first body 110 and the second body 120, and the second body 120 may be slidably disposed on the sliding bracket 130, so that the second body 120 may slide relative to the first body 110, and the handheld electronic device 100 may be switched between an overlapping status shown in FIG. 2 and a spreading status shown in FIG. 3. In the present embodiment, the sliding bracket 130 has a pivot portion 132 away from the second end S2 of the first body 110. The hinge 140 may be connected between the pivot portion 132 of the sliding bracket 130 and the first body 110. In detail, the sliding bracket 130 includes a first bracket 131 and a second bracket 133, where the first bracket 131 has the pivot portion 132 connected to the hinge 140, and the second body 120 may be fixed to the second bracket 133, and the second bracket 133 may be slidably connected to the first bracket 131, so that the second body 120 may slide relative to the first body 110, though a sliding mechanism of the sliding bracket 130 is not limited by the application.

The raising member 150 may be disposed at the second end S2 of the first body 110 and leans against the sliding bracket 130 to supply a rotating moment T to the sliding bracket 130. Therefore, when the second body 120 moves toward the second end S2 of the first body 110 to present the spreading status shown in FIG. 3, the rotating moment T drives the second body 120 to rotate along the hinge 140 in the spreading status, so that the raising member 150 drives the sliding bracket 130 and the second body 120 thereon to rotate relative to the first body, and the handheld electronic device 100 finally presents a standing status shown in FIG. 4.

According to the above descriptions, in the handheld electronic device 100 of the present embodiment, by disposing the sliding bracket 130 and the raising member 150 at one end of the first body 110, the first body 110 may have more available space. For example, an area of the keyboard A1 on the first body 110 may be enlarged to improve operability of the handheld electronic device 100. Moreover, as the raising member 150 leans against the sliding bracket 130, the raising member 150 may supply the rotating moment T to the sliding bracket 130 to drive the second body 120 to rotate along the hinge 140 when the second body 120 may be in the spreading status relative to the first body 110. In this way, the handheld electronic device 100 may implement motion demands of sliding and rotating through a simple mechanism, so that the handheld electronic device 100 may be developed to be lighter and thinner.

On the other hand, in the handheld electronic device 100 of the present embodiment, the first body 110 has a recess 112 located on a path where the second body 120 rotates along the hinge 140. When the raising member 150 drives the second body 120 to rotate relative to the first body 110, a side edge 122 of the second body 120 may be rotated into the recess 112, and since a profile of the side edge 122 may be complied with that of the recess 112, the second body 120 may be stopped by the recess 112, so that the second body 120 may be in the standing status relative to the first body 110 by an angle as that shown in FIG. 4. In the present embodiment, a designer may suitably adjust the angle between the second body 120 and the first body 110 by changing a position and a profile of the recess 112 on the first body 110.

It should be noticed that when the second body 120 may be in the standing status relative to the first body 110, the raising member 150 sustained between the sliding bracket 130 and the first body 110 substantially forms an angle with the sliding bracket 130, and such angle may be greater than 90 degrees and smaller than 180 degrees. In some cases, to ensure the raising member 150 stably supporting the first body 110, a position relationship between the sliding bracket 130 and the raising member 150 may approach a so-called "dead point position" of a mechanism system. The so-called "dead point position" refers to that a linkage mechanism may be in a stable state, which may be a state that an active member may be hard to drive a follower to move. In the present embodiment, the dead point position may be achieved when an angle formed between the sliding bracket 130 and the raising element 150 may be 90 degrees.

In the present embodiment, the position relationship between the sliding bracket 130 and the raising member 150 may approach the dead point position, so that the raising member 150 may provide good support for the sliding bracket 130. However, a situation that the position relationship between the sliding bracket 130 and the raising member 150 may be just the dead point position should be avoided, so as to avoid sticking of the sliding bracket 130 and the raising member 150. Therefore, the angle between the sliding bracket 130 and the raising member 150 may be substantially greater than 90 degrees and smaller than or equal to 180 degrees. In other words, the sliding bracket 130 may be located near but not just on the dead point position relative to the raising member 150. Particularly, the angle between the sliding bracket 130 and the raising member 150 may be within a range of greater than 90 degrees and smaller than or equal to 100 degrees. In this way, the raising member 150 may provide the sliding bracket 130 a larger normal supporting force.

Therefore, when the user presses the touch screen A2 to operate the handheld electronic device 100 in the standing status, the raising member 150 has an enough structure strength to support the sliding bracket 130 and the second body 120 to endure a pressing force of the user without influencing a relative movement of the first body 110 and the sliding bracket 130, so that the handheld electronic device 100 has a better operating sense in the standing status.

On the other hand, in the present embodiment, a first side S3 of the raising member 150 may be substantially pivoted in a recess portion 114 of the first body 110, and a second side S4 of the raising member 150 leans against the sliding bracket 130. Moreover, the handheld electronic device 100 further includes an elastic member 160, which is, for example, a torsion spring connected between the first side S3 of the raising member 150 and the first body 110. Here, the elastic member 160 may be a source of the rotating moment T supplied to the sliding bracket 130 by the raising member 150.

In other words, when the handheld electronic device 100 may be in the overlapping status shown in FIG. 2, the rotating moment T provided by the elastic member 160 may be limited by the mutual interference between the first body 110 and the second body 120, and the elastic member 160 may be in an elastic deformation state. Once the second body 120 may be slid relative to the frst body 110 to the spreading status shown in FIG. 3, the elastic member 160 releases its elastic force to drive the raising member 150 to rotate relative to the first body 110 along a first direction D1, and meanwhile drive the sliding bracket 130 and the second body 120 thereon to rotate relative to the first body 110 along a second direction D2 opposite to the first direction D1.

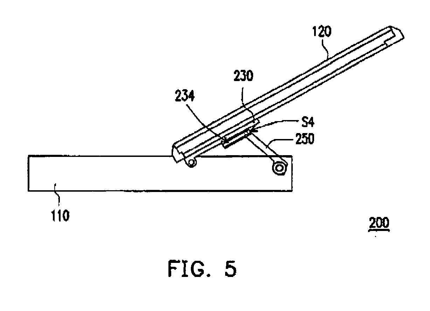

Here, a linkage structure between the raising member and the sliding bracket is not limited, and FIG. 5 is a schematic diagram of a handheld electronic device according to another embodiment of the application. Referring to FIG. 5, different to the aforementioned embodiment, in the handheld electronic device 200 of the present embodiment, a sliding slot 234 may be disposed on a sliding bracket 230 back to the second body 120, and a second side S4 of a raising member 250 may be slidably pivoted to the sliding slot 234. In this way, the raising member 250 and the sliding bracket 230 form a linkage mechanism having both of a sliding and a rotating effects, so as to achieve a same effect as that of the aforementioned embodiment.

In summary, in the handheld electronic device of the application, by disposing the sliding bracket and the raising member at one end of the first body, the first body may have more available space. Moreover, the raising member leans against the sliding bracket. When the second body is in the spreading status relative to the first body, the raising member may supply a rotating moment to the sliding bracket to drive the second body to rotate along the hinge, so that the second body may be switched from the spreading status to the standing status relative to the first body. In this way, the handheld electronic device may implement motion demands of sliding and rotating through a simple mechanism. Therefore, the handheld electronic device may be developed to be lighter and thinner.

It will be apparent to those skilled in the art that various modifications and variations may be made to the structure of the application without departing from the scope of the application. In view of the foregoing, it is intended that the application cover modifications and variations of this application provided they fall within the scope of the following claims and their equivalents.

## Claims

1. A handheld electronic device (100), comprising:
a first body (110), having a first end and a second end opposite to the first end;
a second body (120), disposed on the first body (110);
a sliding bracket (130), disposed between the first and the second body (110, 120), wherein the second body (120) is slidably disposed on the sliding bracket (130) to slide relative to the first body (110), and the sliding bracket (130) has a pivot portion (132) away from the second end of the first body (110);
a hinge (140), connected between the pivot portion (132) of the sliding bracket (130) and the first body (110); and
a raising member (150), disposed at the second end of the first body (110), and leaning against the sliding bracket (130) to supply a rotating moment to the sliding bracket (130), wherein the second body (120) is adapted to move toward the second end of the first body (110) to present a spreading status, and the rotating moment is adapted to drive the second body (120) to rotate along the hinge (140) in the spreading status,
wherein the first body (110) has a recess (112) located on a path where the second body (120) rotates along the hinge (140), and a side edge (122) of the second body (120) is adapted to rotate into and be stopped by the recess (112), so that the second body (120) is in a standing status relative to the first body (110) by an angle.

2. The handheld electronic device as claimed in claim 1, wherein a profile of the recess (112) is complied with a profile of the side edge (122) of the second body (120).

3. The handheld electronic device as claimed in claim 1 or 2, wherein an angle between the sliding bracket (130) and the raising member (150) is greater than 90 degrees and smaller than 180 degrees in the standing status.

4. The handheld electronic device as claimed in claim 2, wherein the angle between the sliding bracket (130) and the raising member (150) is greater than 90 degrees and smaller than or substantially equal to 180 degrees.

5. The handheld electronic device as claimed in one or more of the claims 1 to 4, further comprising:
an elastic member, disposed between the raising member and the first body, and severing as a source of the rotating moment supplied to the sliding bracket by the raising member.

6. The handheld electronic device as claimed in claim 5, wherein the elastic member (160) is adapted to drive the raising member (150) to rotate relative to the first body (110), so as to push the sliding bracket (130) to rotate along the hinge (140), wherein a rotating direction of the raising member (150) is opposite to a rotating direction of the sliding bracket (130).

7. The handheld electronic device as claimed in one or more of the claims 1 to 6, wherein the sliding bracket (230) has a sliding slot (234) back to the second body (120), and the raising member (150) is slidably pivoted to the sliding slot (234).

## Patentansprüche

1. Eine tragbare elektronische Vorrichtung (100), umfassend:
einen ersten Körper (110) mit einem ersten Ende und einem zweiten Ende gegenüberliegend dem ersten Ende;
einen zweiten Körper (120), der auf dem ersten Körper (110) angeordnet ist;
ein Gleithalterung (130), die zwischen dem ersten und dem zweiten Körper (110, 120) angeordnet ist, wobei der zweite Körper (120) verschiebbar auf der Gleithalterung (130) angeordnet ist, um relativ zu dem ersten Körper (110) zu gleiten, und die Gleithalterung (130) hat einen Drehabschnitt ( 132) entfernt von dem zweiten Ende des ersten Körpers (110);
ein Scharnier (140), das zwischen dem Schwenkpunkt (132) der Gleithalterung (130) und dem ersten Körper (110) angebunden ist, und
ein Hebeelement (150), das an dem zweiten Ende des ersten Körpers (110) angeordnet ist, und, das sich gegen die Gleithalterung (130) anlehnt, um ein Drehmoment auf die Gleithalterung (130) bereit zu stellen, wobei der zweite Körper (120) ausgebildet ist, um sich in Richtung zu dem zweiten Ende des ersten Körpers (110) zu bewegen, um einen ausgebreiteten Zustand zu bilden, und das Drehmoment ist angepasst, um den zweiten Körper (120) anzutreiben, um in ausgebreiteten Zustand entlang des Scharniers zu drehen (140),
wobei der erste Körper (110) eine Aussparung (112) auf einem Pfad hat, auf dem der zweite Körper (120) entlang des Gelenks (140) dreht, und ein Seitenrand (122) des zweiten Körpers (120) ist geeignet, in Richtung der Aussparung (112) zu drehen und durch diese angehalten zu werden, so dass der zweite Körper (120) in einem stehenden Zustand relativ zu dem ersten Körper (110) in einem Winkel steht.

2. Die tragbare elektronische Vorrichtung nach Anspruch 1, wobel ein Profil der Aussparung (112) mit einem Profil der Seitenkante (122) des zweiten Körpers (120) übereinstimmt.

3. Die tragbare elektronische Vorrichtung nach Anspruch 1 oder 2, wobei ein Winkel zwischen der Gleithalterung (130) und dem Hebeelement (150) größer als 90 Grad ist und kleiner als 180 Grad in dem ausgebreiteten Zustand.

4. Die tragbare elektronische Vorrichtung nach Anspruch 2, wobel der Winkel zwischen der Glelthalterung (130) und dem Hebeelement (150) größer als 90 Grad ist und kleiner oder im Wesentlichen gleich 180 Grad ist.

5. Die tragbare elektronische Vorrichtung nach einem oder mehreren der Ansprüche 1,
bis 4, ferner umfassend:
ein elastisches Element, das zwischen dem Hebeelement und dem ersten Körper angeordnet ist,
und das als Quelle des Drehmoments dient, das der Gleithalterung durch das Hebeelement zugeführt wird.

6. Die tragbare elektronische Vorrichtung nach Anspruch 5, wobei das elastische Element (160) angepasst ist, um das Hebeelement (150) anzutreiben, sich relativ zu dem ersten Körper (110) zu drehen, um so die Gleithalterung (130) entlang des Scharniers (140) zu drehen, wobei eine Drehrichtung des Hebeelements (150) gegenläufig zu einer Drehrichtung der Gleithalterung (130) ist.

7. Die tragbare elektronische Vorrichtung nach einem oder mehreren Ansprüche 1 bis 6, wobei die verschiebbare Halterung (230) einen Gleitschlitz (234) zurück auf den zweiten Körper (120) hat, und das Hebeelement (150) ist gleitend drehbar zu dem Gleitschlitz (234).

## Revendications

1. Un dispositif électronique portable (100), comprenant :
un premier corps (110), ayant une première extrémité et une seconde extrémité opposée à la première extrémité ;
un second corps (120), disposé sur le premier corps ;
un support coulissant (130), disposé entre le premier et le second corps (110, 120), dans lequel le second corps (120) est disposé de manière coulissante sur le support coulissant (130) pour un coulissement par rapport au premier corps (110), et le support coulissant dispose d'une partie pivot (132) distante de la seconde extrémité du premier corps (110) ;
une articulation (140), fixée entre la partie pivot (132) du support coulissant (130) et le premier corps (110) ; et
un élément élévateur (150) disposé sur la seconde extrémité du premier corps (110), et s'appuyant sur le support coulissant (130) pour exercer un moment rotatif sur le support coulissant (130), dans lequel le second corps (120) est adapté pour un mouvement relativement vers la seconde extrémité du premier corps (110) afin de permettre un état d'extension ; et le moment rotatif est adapté à l'entraînement du second corps (120) en rotation le long de l'articulation (140) dans l'état d'extension ;
dans lequel le premier corps (110) présente une cavité (112) située sur un chemin là ou le second corps (120) est en rotation le long de l'articulation(140), et un bord latéral (122) du second corps (120) est adapté à une rotation jusqu'au blocage dans la cavité (112), de telle manière que le second corps (120) s'élève d'un angle relativement au premier corps (110).

2. Le dispositif électronique portable tel que revendiqué dans la revendication 1, dans lequel la profil de la cavité (112) correspond au profil du bord latéral (122) du second corps (120).

3. Le dispositif électronique portable tel que revendiqué dans la revendication 1 ou 2, dans lequel un angle entre le support coulissant (130) et l'élément élévateur (150) est supérieur à 90 degrés et inférieur à 180 degrés dans l'état d'élévation.

4. Le dispositif électronique portable tel que revendiqué dans la revendication 2, dans lequel l'angle entre le support coulissant (130) et l'élément élévateur (150) est supérieur à 90 degrés et inférieur ou substantiellement égal à 180 degrés.

5. Le dispositif électronique portable tel que revendiqué dans l'une ou plusieurs des revendications 1 à 4, comprenant en outre :
un élément élastique disposé entre l'élément élévateur et le premier corps, et servant de source au moment rotatif appliqué par l'élément élévateur au support coulissant.

6. Le dispositif électronique portable tel que revendiqué dans la revendication 5, dans lequel l'élément élastique (160) est adapté à l'entraînement de l'élément élévateur (150) en rotation relativement au premier corps (110), de manière à pousser le support coulissant (130) en rotation le long de l'articulation (140), dans lequel une direction de rotation de l'élément élévateur (150) est opposée à une direction de rotation du support coulissant (130).

7. Le dispositif électronique portable tel que revendiqué dans une ou plusieurs des revendications 1 à 6, dans lequel le support coulissant (230) présente un orifice coulissant (234) de retour sur le second corps (120), et l'élément élévateur (150) est en pivot coulissant vers l'orifice coulissant (234).
